# EUROPEAN PATENT APPLICATION

(11) **EP 4 782 140 A1**
(43) Date of publication of application: **29.07.2026**
(21) Application number: 26153078.6
(22) Date of filing: 20.01.2026
(51) Int. Cl.: B23K 26/0622, B44C 1/22, G04B 45/00

(54) **METHOD FOR DECORATING TIMEPIECE COMPONENT, TIMEPIECE COMPONENT, AND TIMEPIECE**

(30) Priority: 24.01.2025 JP 2025010395
(71) Applicant: Seiko Epson Corporation, Tokyo 160-8801 (JP)
(72) Inventor: AOKI, Shunsei, Suwa-shi, Nagano, 392-8502 (JP); OKUDA, Kotaro, Suwa-shi, Nagano, 392-8502 (JP); YOSHINAGA, Ai, Suwa-shi, Nagano, 392-8502 (JP)
(74) Representative: MERH-IP Matias Erny Reichl Hoffmann Patentanwälte PartG mbB

(57) **Abstract**

A method is decorating a timepiece component in which a base made of a metal is decorated by irradiating a surface of the base with a pulse laser while relatively moving a laser irradiation portion and the base. The method includes scanning the surface while irradiating the surface with the pulse laser to process a first processing region of the surface, and scanning the surface while irradiating the surface with the pulse laser to process a second processing region that overlaps a part of the first processing region when viewed from a first direction that is a vertical direction with respect to the surface. The second processing region is located on an inner side of end portions of the first processing region R1 when viewed from the first direction.

## Description

### BACKGROUND

### 1. Technical Field

The present disclosure relates to a method for decorating a timepiece component, a timepiece component, and a timepiece.

### 2. Related Art

JP-T-2020-501148 discloses a method for manufacturing a dial in which a substrate is etched and decorated by ultrashort pulse laser etching. JP-A-2002-196086 discloses a method for manufacturing a decorative dial in which a nickel plating film is formed at a brass plate having a dial shape by a wet plating method as a finish treatment step.

By applying the finish treatment disclosed in JP-T-2020-501148 to the dial disclosed in JP-A-2002-196086, a dial having improved aesthetic appearance can be obtained.

However, in the methods described in JP-T-2020-501148 and JP-A-2002-196086, a small hole may be formed in a portion on which the ultrashort pulse laser etching is performed, and when a plating solution enters the hole, the plating solution flows out from the hole and stains in a subsequent step, which is a problem that the appearance of the timepiece component is impaired.

### SUMMARY

According to an aspect of the present disclosure, there is provided a method for decorating of a timepiece component in which a base made of a metal is decorated by irradiating a surface of the base with a pulse laser that generates an ultrashort pulse while relatively moving a laser irradiation portion configured to emit the pulse laser and the base constituting the timepiece component, the method including: scanning the surface while irradiating the surface with the pulse laser to process a first processing region of the surface, in a first processing step; and scanning the surface while irradiating the surface with the pulse laser to process a second processing region that overlaps with a part of the first processing region when viewed from a first direction that is a vertical direction with respect to the surface, in a second processing step. The second processing region is located on an inner side of end portions of the first processing region when viewed from the first direction.

According to another aspect of the present disclosure, there is provided a timepiece component including a metal base having a first surface, and a concave portion that has a decorative property and is provided in the first surface. A bottom of the concave portion has a curved surface shape.

According to still another aspect of the present disclosure, there is provided a timepiece including the timepiece component described above, and a case that houses the timepiece component.

### BRIEF DESCRIPTION OF THE DRAWINGS

FIG. 1 is a plan view illustrating a configuration of a timepiece.
FIG. 2 is a plan view illustrating an internal configuration of a timepiece on a dial side.
FIG. 3 is a plan view illustrating a configuration of a circuit cover plate.
FIG. 4 is a perspective view illustrating the configuration of the circuit cover plate.
FIG. 5A is an enlarged plan view illustrating a B portion of the circuit cover plate illustrated in FIG. 4.
FIG. 5B is a cross-sectional view illustrating the configuration of the circuit cover plate illustrated in FIG. 5A.
FIG. 6A is a cross-sectional view illustrating an example of a method of processing a concave portion of a character.
FIG. 6B is a cross-sectional view illustrating an example of the method of processing the concave portion of the character.
FIG. 6C is a cross-sectional view illustrating an example of the method of processing the concave portion of the character.
FIG. 7A is a plan view illustrating the method of processing the concave portion of the character.
FIG. 7B is a cross-sectional view illustrating the method of processing the concave portion of the character.
FIG. 7C is a plan view illustrating the method of processing the concave portion of the character.
FIG. 7D is a cross-sectional view illustrating a shape of the concave portion of the character.
FIG. 8A is a plan view illustrating a method of processing a concave portion of a character in the related art.
FIG. 8B is a cross-sectional view illustrating the method of processing the concave portion of the character in the related art.
FIG. 8C is a cross-sectional view illustrating a shape of a concave portion of a character in the related art.

### DESCRIPTION OF EMBODIMENTS

In the following drawings, three axes orthogonal to each other will be described as an X-axis, a Y-axis, and a Z-axis. A direction along the X-axis is set as an "X-direction", a direction along the Y-axis is set as a "Y-direction", and a direction along the Z-axis is set as a "Z-direction". A direction of an arrow is set as a positive (+) direction, and a direction opposite to the positive direction is set as a negative (-) direction. In addition, the +Z-direction may be referred to as "up" or "upper", and the -Z-direction may be referred to as "down" or "lower". Viewing from the +Z-direction and the -Z-direction may be referred to as a plan view or planar. In addition, a surface on a +Z-direction side is referred to as an upper surface, and a surface on a -Z-direction side opposite to the upper surface is referred to as a lower surface.

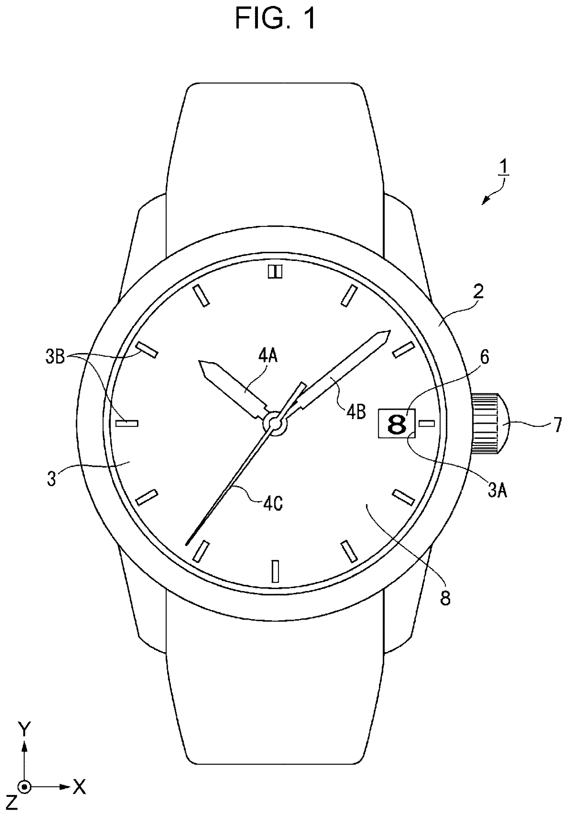

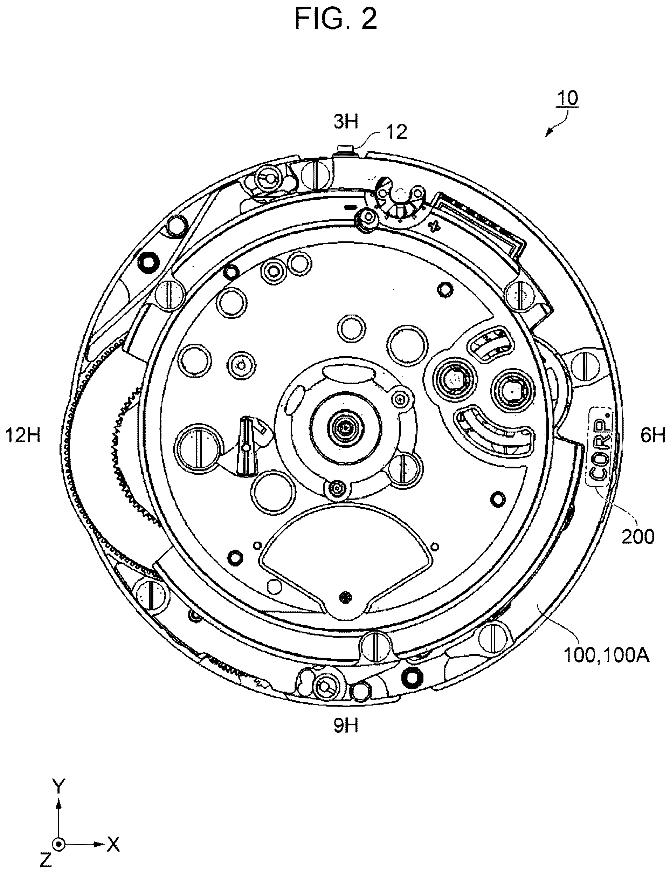

First, a configuration of a timepiece 1 will be described with reference to FIGS. 1 and 2. FIG. 2 illustrates a configuration of a movement 10 when viewed from a dial 3 side.

As illustrated in FIG. 1, the timepiece 1 is a wristwatch worn on a wrist of a user and includes a cylindrical case 2, and a dial 3 is disposed on an inner peripheral side of the case 2. Between two openings of the case 2, an opening on a front surface side is closed by a cover glass 8, and an opening on a rear surface side is closed by a rear cover (not illustrated). The case 2 and the rear cover may not be separate bodies, and may be a one-piece type case formed integrally.

The timepiece 1 includes the movement 10 (refer to FIG. 2) accommodated in the case 2, and an hour hand 4A, a minute hand 4B, and a seconds hand 4C that display time information. The dial 3 is provided with a calendar small window 3A, and a date indicator 6 can be visually recognized from the calendar small window 3A. In addition, the dial 3 is provided with an hour mark 3B for indicating the hour.

A crown 7 attached to a setting stem 12 (refer to FIG. 2) is provided on a side surface of the case 2. The crown 7 can be moved from a zero-stage position pressed toward the center of the timepiece 1 to a first-stage position and a second-stage position. When the crown 7 is rotated at the zero-stage position, a mainspring as a mechanical energy source provided in the movement 10 can be wound.

When the crown 7 is pulled to the first-stage position and rotated, the date indicator 6 can be moved to set the date. When the crown 7 is pulled to the second-stage position, the seconds hand 4C stops, and when the crown 7 is rotated at the second-stage position, the hour hand 4A and the minute hand 4B move, and time can be adjusted.

Here, the movement 10 refers to a structure assembled into one, excluding exterior components such as the case 2, the dial 3, and the hands 4A to 4C from the timepiece 1, and including a drive component for driving the hands 4A to 4C such as a train wheel.

As illustrated in FIG. 2, the setting stem 12 is provided on a side surface of the movement 10 at a 3 o'clock position 3H. The crown 7 is attached to the setting stem 12. A circuit cover plate 100A as an example of a base 100 is disposed around the movement 10. A character 200 is engraved on the base 100. In FIG. 2, a direction of 12 o'clock in the movement 10 is indicated as a position 12H, a direction of 3 o'clock is indicated as a position 3H, a direction of 6 o'clock is indicated as a position 6H, and a direction of 9 o'clock is indicated as a position 9H. In the present embodiment, the circuit cover plate 100A corresponds to a timepiece component, and the character 200 corresponds to decoration.

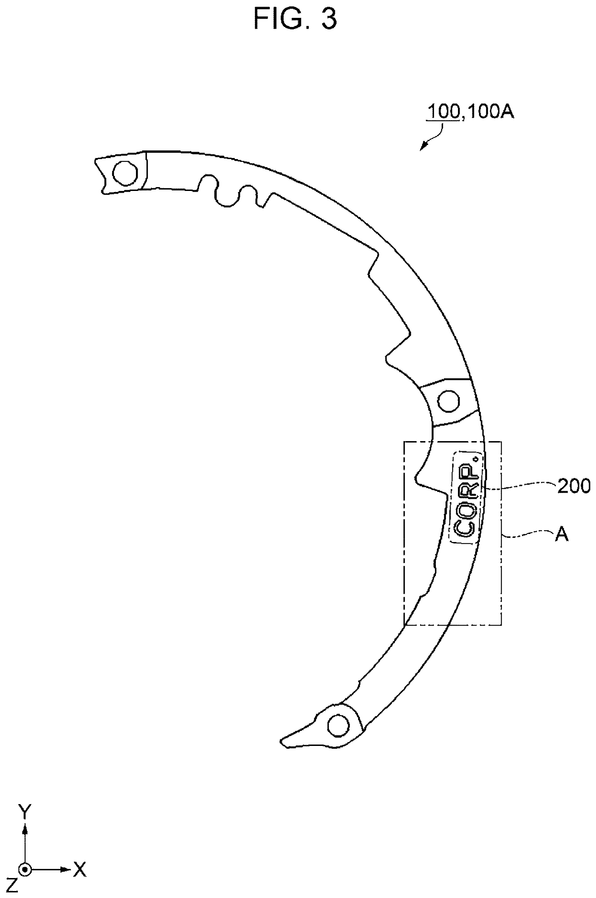

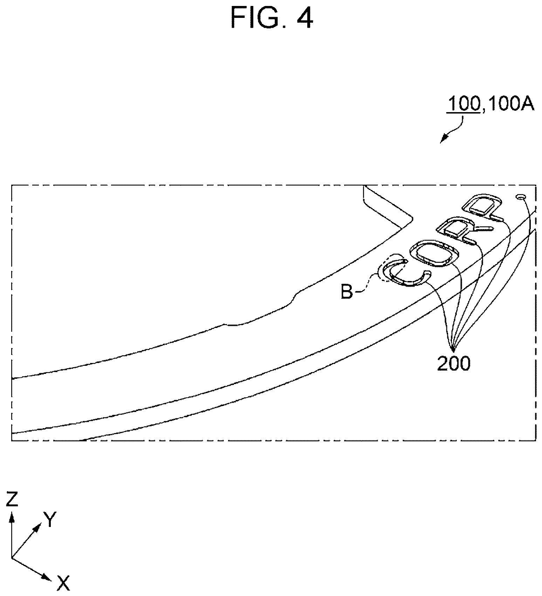

Next, a configuration of the base 100 such as the circuit cover plate 100A will be described with reference to FIGS. 3, 4, 5A, and 5B. FIG. 3 is a plan view illustrating the circuit cover plate 100A. FIG. 4 is a perspective view illustrating an enlarged A portion surrounded by a two-dot chain line in FIG. 3.

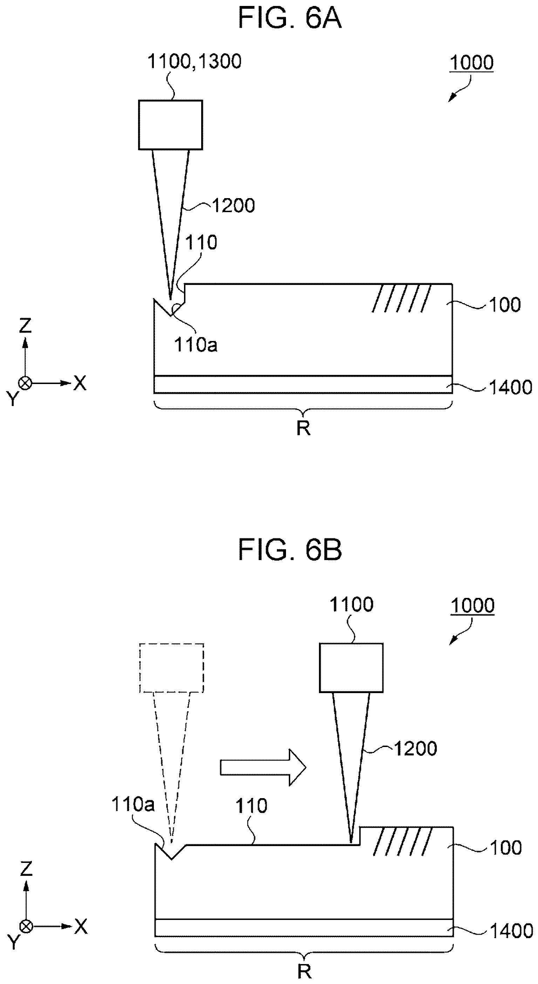

As illustrated in FIGS. 3 and 4, the character 200 is engraved on the base 100. The character 200 is, for example, "CORP." which is an abbreviation of "CORPORATION". The character 200 is processed by irradiating the base 100 with a pulse laser 1200 (refer to FIG. 6A) that generates an ultrashort pulse.

Processing by the pulse laser 1200 that generates an ultrashort pulse is a processing method in which a high peak output is applied for a short time to decompose and transpire (ablation processing) a processing surface. Specifically, among lasers, the pulse laser 1200 is a method of outputting light at a constant repetition frequency, and is good at fine processing by causing an ablation phenomenon.

A pulse width of the pulse laser 1200 is generally divided from milliseconds to femtoseconds. When compared at the same output, the shorter the pulse width, the higher the peak intensity. In particular, in the pulse width of several picoseconds to femtoseconds, a heat conduction time is extremely short, and a material surface can be removed before the material surface is melted. Therefore, a material can be processed with extremely high accuracy as compared with the pulse width of nanoseconds in which a processing surface tends to be roughened due to a molten layer. Hereinafter, the pulse laser 1200 that outputs a pulse having a pulse width of several picoseconds to femtoseconds is referred to as an ultrashort pulse laser.

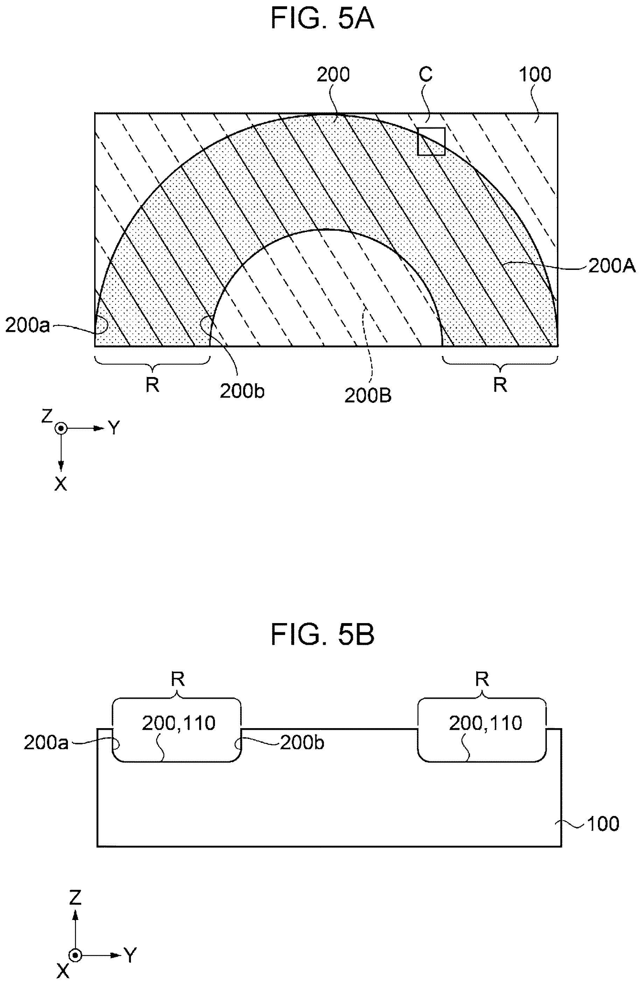

FIG. 5A is an enlarged plan view illustrating a B portion of the base 100 illustrated in FIG. 4, and a region drawn with a solid line is the character 200. That is, a part of the character 200 that is "C" is shown. A solid line 200A indicates that a laser irradiation portion 1100 (refer to FIG. 6A) is scanning and moving while performing irradiation with the pulse laser 1200. On the other hand, a broken line 200B indicates that the laser irradiation portion 1100 (refer to FIG. 6A) is scanning and moving in a state in which irradiation with the pulse laser 1200 is not performed.

FIG. 5B illustrates a cross-section of the character 200 processed by being irradiated with the pulse laser 1200. That is, the character 200 is displayed when a surface of the base 100 as a first surface becomes a concave portion 110. In other words, the concave portion 110 has a decorative property.

The base 100 is configured as a metal component. Examples of the metal component include stainless steel, titanium, pure iron, and the like. Note that the material of the base 100 is not limited to these, and may be any material that can be subjected to pulse laser processing.

The laser irradiation portion 1100 (refer to FIG. 6A) that irradiates the base 100 with the pulse laser 1200 includes a light-emitting portion 1300. The light-emitting portion 1300 emits light to perform irradiation with the pulse laser 1200.

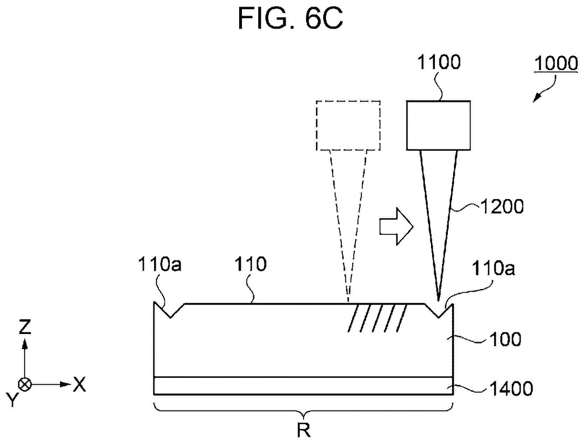

Next, an irradiation method with the pulse laser 1200 will be described with reference to FIGS. 6A, 6B, and 6C.

As illustrated in FIG. 6A, a laser processing machine 1000 includes the laser irradiation portion 1100 and a movement mechanism 1400. As described above, the laser irradiation portion 1100 includes the light-emitting portion 1300. The light-emitting portion 1300 emits light to perform irradiation with the pulse laser 1200.

As described above, the pulse laser 1200 generates an ultrashort pulse. The ultrashort pulse is an electromagnetic pulse having a time order of several picoseconds or less.

The movement mechanism 1400 is, for example, a mechanism that moves a table on which the base 100 that is a processing target is placed in the X-direction and the Y-direction. The movement mechanism 1400 may be any mechanism as long as the movement mechanism 1400 can move the pulse laser 1200 emitted from the laser irradiation portion 1100 relative to the base 100 in a scanning direction.

In the present embodiment, as illustrated in FIGS. 6A to 6C, the concave portion 110 can be formed in a processing region R (refer to FIG. 6C) of the base 100 by repeatedly moving the movement mechanism 1400 from the +X-direction to the -X-direction.

Specifically, when the base 100 and the laser irradiation portion 1100 are relatively scanned and moved, the pulse laser 1200 is emitted only when the laser irradiation portion 1100 passes through the processing region R, and the irradiation with the pulse laser 1200 is stopped at a position where the laser irradiation portion 1100 is out of the processing region R.

First, as illustrated in FIG. 6A, when the laser irradiation portion 1100 passes through the processing region R of the base 100, the concave portion 110 is formed in a surface of the base 100 by irradiating the base 100 with the pulse laser 1200. Next, as illustrated in FIG. 6B, a range of the concave portion 110 is expanded by moving the movement mechanism 1400 in the -X-direction. Thereafter, as illustrated in FIG. 6C, the pulse laser 1200 is emitted within the processing region R of the base 100, and the irradiation of the pulse laser 1200 is stopped at the end of the processing region R. Thereafter, the operation in FIGS. 6A to 6B is repeated until a depth of the concave portion 110 reaches a predetermined depth.

Note that there is time for which irradiation with the pulse laser 1200 is repeated when irradiation with the pulse laser 1200 is started as illustrated in FIG. 6A and when irradiation with the pulse laser 1200 is stopped as illustrated in FIG. 6C. That is, a total irradiation time with the pulse laser 1200 emitted to end portions 200a and 200b of the processing region R becomes longer. Therefore, a depression 110a is formed at the end portions 200a and 200b of the processing region R.

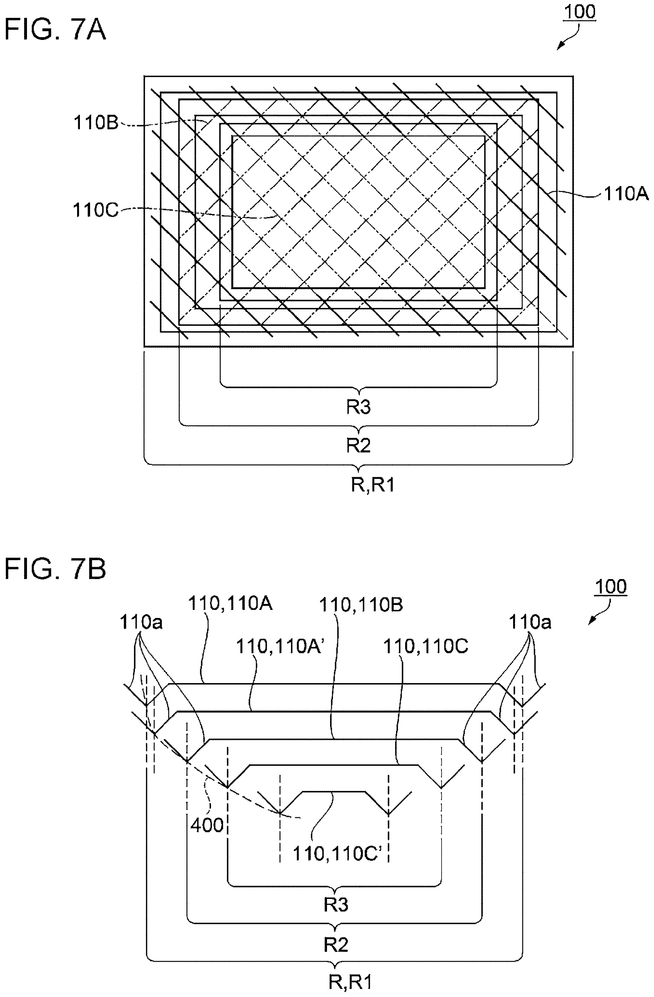

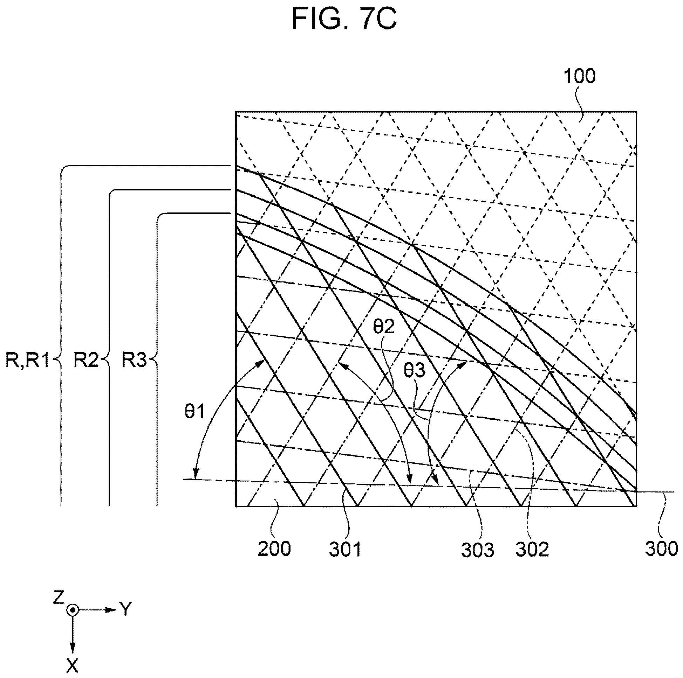

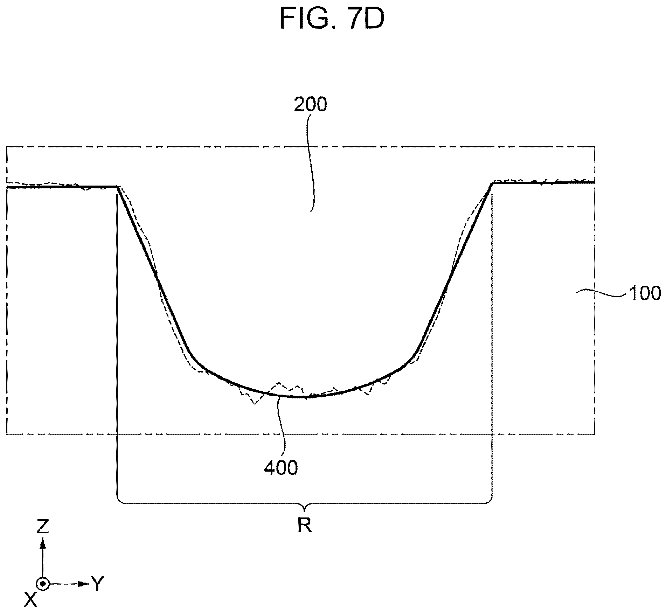

Next, a method for decorating a timepiece component will be described with reference to FIGS. 7A, 7B, 7C, and 7D. As described above, the base 100 such as the circuit cover plate 100A will be described as an example of the timepiece component. Further, FIG. 7C is an enlarged view of a C portion of the circuit cover plate shown in FIG. 5A.

As illustrated in FIGS. 7A and 7B, first, the surface of the base 100 is scanned while being irradiated with the pulse laser 1200 to form a first concave portion 110A constituting a part of the concave portion 110 in a first processing region R1 of the surface (first processing step). As illustrated in FIGS. 5A and 5B, the first processing region R1 is a region between the end portions 200a and 200b of the portion that becomes the character 200.

Specifically, as illustrated in FIG. 7C, the surface is scanned while being irradiated with the pulse laser 1200 along a first scanning straight line 301 that makes a first angle θ1 with a virtual straight line 300 set in the first processing region R1.

Next, the surface of the base 100 is scanned while being irradiated with the pulse laser 1200 to form a second concave portion 110B constituting a part of the concave portion 110 in a second processing region R2 of the surface (second processing step). The second processing region R2 is a region on an inner side of the first processing region R1 when viewed from a first direction that is a vertical direction of the surface, that is, the Z-direction. That is, the second processing region R2 is also a region that overlaps a part of the first processing region R1.

Specifically, as illustrated in FIG. 7C, the surface is scanned while being irradiated with the pulse laser 1200 along a second scanning straight line 302 that makes a second angle θ2 with the virtual straight line 300. As illustrated in FIG. 7B, a first concave portion 110A' may be formed between the first processing region R1 and the second processing region R2 in a region on an inner side of the first processing region R1 and on an outer side of the second processing region R2.

Next, the surface of the base 100 is scanned while being irradiated with the pulse laser 1200 to form a third concave portion 110C constituting a part of the concave portion 110 in a third processing region R3 of the surface (third processing step). The third processing region R3 is a region on an inner side of the second processing region R2 when viewed from the first direction that is the vertical direction of the surface, that is, the Z-direction. That is, the third processing region R3 is also a region that overlaps a part of the second processing region R2.

Specifically, as illustrated in FIG. 7C, the surface is scanned along a third scanning straight line 303 that makes a third angle θ3 with the virtual straight line 300 while being irradiated with the pulse laser 1200. As illustrated in FIG. 7B, a third concave portion 110C' may be formed on an inner side of the third processing region R3.

By performing processing in this way, as illustrated in FIGS. 7B and 7D, decoration in which a curved surface 400 is formed at the bottom of the concave portion 110 can be performed. The figure illustrated in FIG. 7D is a cross-sectional shape of the concave portion 110 constituting the character 200 formed by the decoration method of the present embodiment. A broken line is a shape of the actual concave portion 110. A solid line is a line that approximates the broken line. In the present embodiment, the bottom of the concave portion 110 has an arc shape.

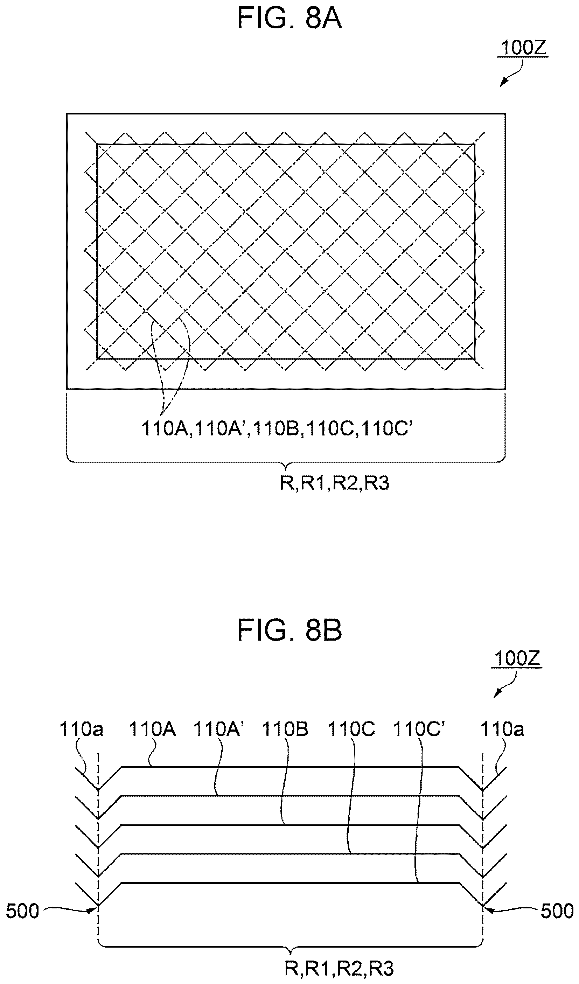

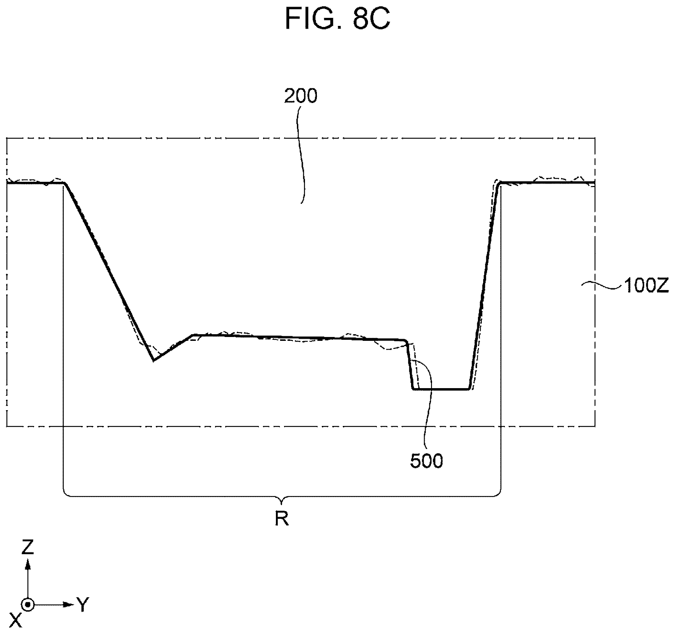

Next, a method for decorating a timepiece component in the related art will be described with reference to FIGS. 8A, 8B, and 8C. As described above, a base 100Z such as the circuit cover plate 100A is used as the timepiece component.

As illustrated in FIGS. 8A and 8B, first, a surface of the base 100Z is scanned while being irradiated with the pulse laser 1200 to form a first concave portion 110A constituting a part of a concave portion 110 in a first processing region R1 of the surface. Note that a scanning angle is, for example, the same as that of the concave portion 110 of the present embodiment.

Next, the surface of the base 100Z is scanned while being irradiated with the pulse laser 1200 to form a second concave portion 110B constituting a part of the concave portion 110 in a second processing region R2 of the surface. The first processing region R1 and the second processing region R2 are the same region.

Next, the surface of the base 100Z is scanned while being irradiated with the pulse laser 1200 to form a third concave portion 110C constituting a part of the concave portion 110 in a third processing region R3 of the surface. The third processing region R3 and the second processing region R2 are the same region.

As in the present embodiment, the first concave portion 110A' and the third concave portion 110C' may be subjected to additional processing. In any case, the same region as the first processing region R1 is processed. As described above, when irradiation with the pulse laser 1200 is repeatedly performed in the processing region R of the base 100, there is a concern that holes 500 are formed at the end portions 200a and 200b of the processing region R (refer to FIGS. 8B and 8C).

Specifically, as illustrated in FIG. 8B, when a linear shape is processed, it is ideal that the laser irradiation portion 1100 starts output of the pulse laser 1200 at the same time as a start point and stops the output of the pulse laser 1200 at the same time as reaching an end point. However, in practice, a scanning function of the laser irradiation portion 1100 and an output start function and a stop function of the pulse laser 1200 are independent due to characteristics of a processing machine main body, and thus there is a difference in timing.

Due to this difference, at the start point and the end point, time for which the pulse laser 1200 is emitted is slightly increased, and a processing amount is also increased. As illustrated in FIG. 8B, the difference in the amount of processing results in formation of the depression 110a at corners of a processed shape due to overlapping of layers. In particular, in a case of the ultrashort pulse laser, since high output energy can be locally applied in a short time due to characteristics thereof, the difference in the processing amount is likely to occur between a scanning location and a start point location and an end point location, and thus not only the depression 110a but also the hole 500 like a pinhole is likely to be formed.

When the hole 500 is formed, for example, when wet plating is performed as a finish treatment step of the timepiece component, which is performed in the subsequent step, a liquid used during the plating treatment enters the hole 500. After all processing steps are completed, the liquid may flow out from the hole 500 and spread on the surface, and a stain may occur. As a result, there is a risk of an appearance defect.

The figure illustrated in FIG. 8C is a cross-sectional shape of the concave portion 110 constituting the character 200 formed by the decoration method in the related art. A broken line is a shape of the actual concave portion 110. A solid line is a line that approximates the broken line.

However, according to the method for decorating the timepiece component of the present embodiment, since the first processing region R1 is irradiated with the pulse laser 1200, the second processing region R2 on an inner side of the first processing region R1 is irradiated with the pulse laser 1200, and the third processing region R3 on an inner side of the second processing region R2 is irradiated with the pulse laser 1200, portions where the pulse laser 1200 stays can be prevented from overlapping with each other at the end portions 200a and 200b of the processing region R. Therefore, the total irradiation time with the pulse laser 1200 emitted to the end portions 200a and 200b can be shortened as compared with a case where the end portions 200a and 200b of the first processing region R1, the end portions 200a and 200b of the second processing region R2, and the end portions 200a and 200b of the third processing region R3 are at the same position, and for example, formation of the hole 500 at the end portions 200a and 200b can be suppressed. As a result, for example, when the plating solution is applied to the timepiece component as a finish treatment step, occurrence of a stain, which occurs when the plating solution enters the hole 500, and the plating solution flows out from the hole 500, can be suppressed. Accordingly, the aesthetic appearance of the timepiece component can be improved.

Further, after forming the first concave portion 110A, the second concave portion 110B is formed on an inner side of the first concave portion 110A, and this is repeated, and thus the bottom of the concave portion 110 has a curved surface shape. That is, irradiation with the pulse laser 1200 can be prevented from being stopped at the end portions 200a and 200b of the processing region R. Therefore, formation of the holes 500 in the end portions 200a and 200b can be suppressed, and the aesthetic appearance of the timepiece component can be improved.

Further, since processing is performed along the first scanning straight line 301 and the second scanning straight line 302 differently at an angle, the end portions 200a and 200b of the first processing region R1 and the end portions 200a and 200b of the second processing region R2 can be made less likely to overlap with each other as compared with the case where processing is performed along scanning straight lines having the same angle. Therefore, the holes 500 can be suppressed from being formed in the end portions 200a and 200b, and the aesthetic appearance of the timepiece component can be suppressed from being deteriorated.

As described above, the method for decorating a timepiece component according to the present embodiment is a method for decorating a timepiece component in which the base 100 made of a metal is decorated by irradiating a surface of the base 100 with the pulse laser 1200 that generates an ultrashort pulse while relatively moving the laser irradiation portion 1100 that emits the pulse laser 1200 and the base 100 that constitutes the timepiece component. The method includes a first processing step of scanning the surface while irradiating the surface with the pulse laser 1200 to process the first processing region R1 on the surface, and a second processing step of scanning the surface while irradiating the surface with the pulse laser 1200 to process the second processing region R2 that overlaps with a part of the first processing region R1 when viewed from a first direction, which is a vertical direction with respect to the surface, in which the second processing region R2 is located on an inner side of the end portions 200a and 200b of the first processing region R1 when viewed from the first direction.

According to this method, after the first processing region R1 is irradiated with the pulse laser 1200, the second processing region R2 on an inner side of the first processing region R1 is irradiated with the pulse laser 1200. In other words, the processing region R is gradually narrowed. Therefore, portions where the pulse laser 1200 stays are prevented from overlapping with each other at the end portions 200a and 200b of the processing region R. Therefore, the total irradiation time of the pulse laser 1200 irradiating the end portions 200a and 200b can be shortened as compared with a case where the end portions 200a and 200b of the first processing region R1 and the end portions 200a and 200b of the second processing region R2 are the same, and for example, formation of the hole 500 in the end portions 200a and 200b can be suppressed. As a result, for example, when the plating solution is applied to the timepiece component as a finish treatment step, occurrence of a stain, which occurs when the plating solution enters the hole 500, and the plating solution flows out from the hole 500, can be suppressed. Accordingly, the aesthetic appearance of the timepiece component can be improved.

Further, since the irradiation with the pulse laser 1200 is dispersed at the bottom portion of the concave portion 110, formation of the hole 500 at the corner can be suppressed even when the output is high as in the ultrashort pulse laser. As a result, non-contact and precise shape processing by the ultrashort pulse laser and a surface treatment by wet plating can be compatible.

In addition, in the method for decorating the timepiece component according to the present embodiment, it is preferable that the first processing step forms the first concave portion 110A constituting a part of the concave portion 110 in the first processing region R1 on the surface, the second processing step forms the second concave portion 110B constituting a part of the concave portion 110 in the second processing region R2 on the surface, and the bottom of the concave portion 110 has a curved surface shape. According to this method, after the first concave portion 110A is formed, the second concave portion 110B is formed on an inner side of the first concave portion 110A, and this is repeated. Accordingly, the bottom of the concave portion 110 has a curved surface shape. That is, portions where the pulse laser 1200 stays can be prevented from overlapping at the end portions 200a and 200b of the processing region. Therefore, formation of the holes 500 in the end portions 200a and 200b can be suppressed, and the aesthetic appearance of the timepiece component can be improved.

In the method for decorating the timepiece component according to the present embodiment, it is preferable that, in the first processing step, the surface is scanned while being irradiated with the pulse laser 1200 along the first scanning straight line 301 that makes the first angle θ1 with the virtual straight line 300 set on the surface, and in the second processing step, the surface is scanned while being irradiated with the pulse laser 1200 along the second scanning straight line 302 that makes the second angle θ2 different from the first angle θ1 with the virtual straight line 300. According to this method, the processing is performed along the first scanning straight line 301 and the second scanning straight line 302 different in an angle. Therefore, as compared with a case where the processing is performed along scanning straight lines having the same angle, the end portions 200a and 200b of the first processing region R1 and the end portions 200a and 200b of the second processing region R2 can be made less likely to overlap each other. Therefore, the holes 500 can be suppressed from being formed in the end portions 200a and 200b, and the aesthetic appearance of the timepiece component can be suppressed from being deteriorated.

The method for decorating the timepiece component according to the present embodiment may further include a third processing step of processing the third processing region R3 that overlaps a part of the second processing region R2 when viewed from the first direction by scanning the surface while irradiating the surface with the pulse laser 1200. It is preferable that the third processing region R3 is located on an inner side of the end portions 200a and 200b of the second processing region R2 when viewed from the first direction, in the third processing step, the surface is scanned while being irradiated with the pulse laser 1200 along the third scanning straight line 303 that makes the third angle θ3 different from the first angle θ1 and the second angle θ2 with the virtual straight line 300. According to this method, the third processing region R3 is located on an inner side of the second processing region R2, and processing is performed along the first scanning straight line 301, the second scanning straight line 302, and the third scanning straight line 303 different in an angle. Therefore, the end portions 200a and 200b of the first processing region R1, the end portions 200a and 200b of the second processing region R2, and the end portions 200a and 200b of the third processing region R3 can be prevented from overlapping. Therefore, the holes 500 can be suppressed from being formed in the end portions 200a and 200b, and the aesthetic appearance of the timepiece component can be suppressed from being deteriorated.

In addition, the timepiece component according to the present embodiment includes the base 100 made of a metal and having a first surface, and the concave portion 110 having a decorative property provided on the first surface, and the bottom of the concave portion 110 has a curved surface shape. According to this configuration, since the bottom of the concave portion 110 has a curved surface shape, for example, portions where the pulse laser 1200 stays can be prevented from overlapping with each other at the end portions 200a and 200b of the processing region R. Therefore, formation of the holes 500 at the end portions 200a and 200b of the concave portion 110 can be suppressed, and the aesthetic appearance of the timepiece component can be improved.

In addition, the timepiece 1 according to the present embodiment includes the above-described timepiece component and the case 2 that houses the timepiece component. According to this configuration, the timepiece 1 configured to improve the aesthetic appearance can be provided.

Hereinafter, modification examples of the embodiments described above will be described.

As in the above-described embodiment, the first concave portion 110A to the third concave portion 110C are not limited to being scanned from different directions, and may all be scanned from the same direction, or a scanning order may be changed.

As described above, the character 200 is exemplified as the target to be decorated in the embodiment, but the decoration method may be applied to a shape or a pattern as the target to be decorated.

As described above, the example in which the concave portion 110 is formed of three to five layers such as the first concave portion 110A to the third concave portion 110C as in the above-described embodiment is described, but the present disclosure is not limited thereto, and for example, the concave portion 110 may be formed of 45 layers.

As in the above-described embodiment, the bottom of the concave portion 110 of the character 200 as decoration has a curved surface shape, but the present disclosure is not limited thereto. The bottom of the concave portion may have a stepped slope shape instead of the curved surface shape.

As described above, the circuit cover plate 100A is described as an example of the timepiece component in the embodiment, but the present disclosure is not limited thereto. The timepiece component may be a dial, an oscillating weight, a train wheel bridge, or the like, which is made of a metal and is constituted by a flat plate-shaped base including a flat surface portion on which decoration is formed. In addition, the timepiece component may be a case or a band constituted by a metal base including a flat surface portion on which decoration is formed. When the timepiece components are assembled as a timepiece, the formed decoration is a part that can be visually recognized from the outside of the timepiece.

## Claims

1. A method for decorating a timepiece component in which a base made of a metal is decorated by irradiating a surface of the base with a pulse laser that generates an ultrashort pulse while relatively moving a laser irradiation portion configured to emit the pulse laser and the base constituting the timepiece component, the method comprising:
scanning the surface while irradiating the surface with the pulse laser to process a first processing region of the surface, in a first processing step; and
scanning the surface while irradiating the surface with the pulse laser to process a second processing region that overlaps with a part of the first processing region when viewed from a first direction that is a vertical direction with respect to the surface, in a second processing step, wherein
the second processing region is located on an inner side of end portions of the first processing region when viewed from the first direction.

2. The method for decorating a timepiece component according to claim 1, wherein
in the first processing step, a first concave portion that constitutes a part of a concave portion is formed in the first processing region of the surface,
in the second processing step, a second concave portion that constitutes a part of the concave portion is formed in the second processing region of the surface, and
a bottom of the concave portion has a curved surface shape.

3. The method for decorating a timepiece component according to claim 1 or 2, wherein
in the first processing step, the surface is scanned while being irradiated with the pulse laser along a first scanning straight line that makes a first angle with a virtual straight line set on the surface, and
in the second processing step, the surface is scanned while being irradiated with the pulse laser along a second scanning straight line that makes a second angle different from the first angle with the virtual straight line.

4. The method for decorating a timepiece component according to claim 3, further comprising:
scanning the surface while irradiating the surface with the pulse laser to process a third processing region that overlaps with a part of the second processing region when viewed from the first direction, in a third processing step, wherein
the third processing region is located on an inner side of end portions of the second processing region when viewed from the first direction, and
in the third processing step, the surface is scanned while being irradiated with the pulse laser along a third scanning straight line that makes a third angle different from the first angle and the second angle with the virtual straight line.

5. A timepiece component comprising:
a metal base having a first surface; and
a concave portion that has a decorative property and is provided in the first surface, wherein
a bottom of the concave portion has a curved surface shape.

6. A timepiece comprising:
the timepiece component according to claim 5; and
a case that houses the timepiece component.
